# NEUE EUROPÄISCHE PATENTSCHRIFT

(11) **EP 2 055 403 B2**
(45) Veröffentlichungstag und Bekanntmachung des Hinweises auf die Entscheidung über den Einspruch: **20.06.2018**
(45) Hinweis auf die Patenterteilung: 25.03.2015
(21) Anmeldenummer: 08018927.7
(22) Anmeldetag: 29.10.2008
(51) Int. Cl.: B21D 3/16

(54) **Verfahren und Vorrichtung zum Richten von Rundlauf- oder Geradheitsfehlern an lang gestreckten Werkstücken mit mindestens einem Verzahnungsbereich, wie Zahnwellen oder Zahnstangen**
Device and method for correcting roundness or straighteness errors on elongated workpieces with at least one toothed zone such as gear shafts or gear racks
Procédé et dispositif destinés à corriger des erreurs de circularité et de rectitude sur des pièces de forme allongée dotées d'au moins une zone dentée, comme des arbres dentés ou des crémaillères

(30) Priorität: 29.10.2007 DE 102007051903
(43) Veröffentlichungstag der Anmeldung: 06.05.2009
(73) Patentinhaber: M A E Maschinen- und Apparatebau Götzen GmbH, 40699 Erkrath (DE)
(72) Erfinder: Mitze, Manfred, 58300 Wetter (DE)
(74) Vertreter: Schumacher, Horst

(56) Entgegenhaltungen:
- DE-A1- 19 718 494
- DE-A1- 19 739 368
- DE-A1- 19 920 003
- DE-A1-102005 027 640
- JP-A- H06 185 959
- US-A1- 2004 226 336
- US-B1- 4 547 674
- US-B1- 6 302 764

## Beschreibung

### GEBIET DER ERFINDUNG

Die Erfindung betrifft ein Verfahren und eine Vorrichtung zum Richten von Rundlauf-oder Geradheitsfehlem an lang gestreckten Werkstücken mit mindestens einem Verzahnungsbereich, wie Zahnwellen oder der Zahnstangen, gemäß den Oberbegriffen der Ansprüche 1 und 9.

Solch ein Verfahren bzw. solch eine Vorrichtung ist z.B. in der DE-A-19920003 offenbart.

### TECHNOLOGISCHER HINTERGRUND

Automatische Maschinen zum Richten von Wellen, insbesondere Getriebewellen und Zahnstangen, sind seit vielen Jahren bekannt und vor allem in der Automobilindustrie und bei deren Zulieferern weit verbreitet. Exemplarisch genannt sei die in der DE 42 15 795 C1 beschriebene Biegerichtmaschine, mit der unter anderem Nockenwellen, Antriebswellen für Kraftfahrzeuge, Ritzelwellen oder dergleichen gerichtet werden können.

Die Richtmaschinen haben die Aufgabe, die vor allem durch Wärmebehandlungsprozesse verzogenen Werkstücke durch Biegen über die Streckgrenze hinaus so zu verformen, dass Rundlauffehler bis auf einen zulässigen Restbetrag reduziert werden.

Zur Bewertung dieser Fehler werden die meist wellenförmigen Werkstücke in der Richtmaschine zwischen Spitzen eingespannt. Mit mehreren radial anfahrbaren, über die Länge hinweg verteilten Messtastern und einem zugehörigen Auswertrechner können die Rundlauffehler nach Betrag und Richtung ermittelt werden.

Handelt es sich bei der gewählten Messstelle um einen runden Querschnitt, z.B. den einer späteren Lagerstelle, so kann dieser Taster aus einem einfachen, geraden Flachstahl gefertigt werden.

Häufig handelt es sich jedoch um Wellen mit verzahnten Bereichen, insbesondere um Getriebewellen oder um Zahnstangen. Bei solchen Wellen ist der Rundlauffehler entsprechend der späteren Funktion des Werkstücks nicht nur an den Lagerstellen, sondern zusätzlich auch an den Verzahnungen zu erfassen. Dabei ist weniger die Kontrolle am so genannten Kopfkreisdurchmesser, also am Außenumfang, sondern vielmehr die Erfassung des Rundlaufs am so genannten Betriebswälzkreisdurchmesser oder Teilkreisdurchmesser erforderlich. Daraus resultiert ein erheblicher Aufwand. Am vorderen Ende eines Tasthebels wird - etwa beim Richten von Getriebewellen - ein drehbar gelagertes Lehrzahnrad installiert, das in die zu prüfende Verzahnung am Werkstück eintaucht und während der Messung in ihr abwälzt. Nachteilig bei diesem Verfahren ist die große Anzahl an vorrätig zu haltenden Lehrzahnrädern. Wellen für Kraftfahrzeuggetriebe werden nämlich in sehr vielen Verzahnungsvarianten gefertigt, so dass für jede der Verzahnungen jeweils eigene Lehrzahnräder vorzuhalten sind. Durch die erforderliche Präzision sind diese Lehrzahnräder sehr teuer; sie weisen zudem einen nennenswerten Verschleiß auf. Außerdem führen nicht vermeidbare Herstellungsfehler der Lehrzahnräder zu Beeinträchtigungen bei der Verzahnungsmessung. Diese Ungenauigkeiten können durch eine Korrektursoftware, z.B. gemäß der DE 197 37 213 C2 reduziert, aber nicht beseitigt werden.

Alternativ zu Lehrzahnrädern können die Werkstück-Verzahnungen auch durch Kugeltaster vermessen werden. Eine derartige Vorrichtung ist in der DE 197 39 368 C2 beschrieben. Nachteilig daran ist insbesondere die recht lange Taktzeit, weil die Messkugel in jede Zahnlücke geführt und die Zahnlücke dabei exakt vermessen werden muss. Die Messung ist dabei auf ein ganz bestimmtes Segment des einzelnen Zahnes einer Verzahnung beschränkt und findet nur dann am Betriebswälzkreis statt, wenn der Messkugeldurchmesser für die konkrete Verzahnung passend ist.

Für das Richten von Zahnstangen sind bis heute keine Vorrichtungen im Einsatz, die die Verzahnung im Teilkreis vermessen. Vielmehr wird mit taktilen Tastern nach dem Kopfkreis gerichtet. Ein solches Verfahren ist beispielsweise in der DE 199 20 003 C2 beschrieben.

### DARSTELLUNG DER ERFINDUNG

Der Erfindung liegt das Problem zugrunde, bei gattungsgemäßen Richtverfahren und -vorrichtungen Rundlauf- oder Geradheitsfehler an lang gestreckten Werkstücken mit mindestens einem Verzahnungsbereich, wie Zahnwellen oder der Zahnstangen, schnell und genau zu entfernen oder zu vermindern und gleichwohl aber ein rasches Umrüsten beim Wechsel zu verschieden gebauten Wellen oder Zahnstangen zu erreichen.

Ein weiteres Ziel besteht darin, derartige Rundlauf- und/oder Geradheitsmessungen auch bei stark begrenztem Einbauraum zu verwirklichen sowie den Kostenaufwand solcher Messungen auf einem vertretbaren Maß zu halten.

Zur Lösung dieser Aufgabe wird ein Verfahren mit den Merkmalen des Anspruchs 1 und eine Vorrichtung mit den Merkmalen des Anspruchs 9 vorgeschlagen. Gemäß der Erfindung wird mindestens ein punkt- oder streifenförmiger Lichtstrahl mit einer radialen oder quer zur Längserstreckungsrichtung des Werkstücks weisenden Richtungskomponente nacheinander auf mehrere, in der Bewegungsrichtung des Werkstücks entlang des Verzahnungsbereiches gelegene eng begrenzte Flächenelemente gerichtet und abgebildet. Von den Flächenelementen der Verzahnung reflektiertes Messlicht wird von einer Lichtmesseinrichtung erfasst und zur Abstandsmessung der Reflektionsflächen der Verzahnung von einem Referenzpunkt verarbeitet. Die Abstände der Reflektionsflächen von dem Referenzpunkt werden in verschiedenen Winkel- und/oder Längserstreckungspositionen des Werkstücks verglichen und daraus werden Rundlauf- oder Gradheitsfehler des Werkstücks ermittelt. Die Rundlauf- oder Gradheitsfehler werden durch Richten zwischen den Zentriermitteln mittels Richtambossen und mindestens einem Richthammer in einer Richtpresse entfernt oder vermindert.

Bei einer praktischen Ausführungsform der Erfindung wird der gebündelt auf der Verzahnung auftreffende Lichtstrahl diffus, d.h. in mehr oder minder alle Richtungen reflektiert und das Flächenelement seiner punkt- oder linienförmige Abbildung auf der Verzahnung wird mit einer Lichtmesseinrichtung von einer vorgebbaren Position aus beobachtet und erfasst und zur Abstandsmessung der Reflektionsfläche der Verzahnung verarbeitet.

Im Anwendungsfall des Richtens von Zahnwellen, wie Getriebewellen, werden die Abstände der Reflektionsflächen in verschiedenen Winkelpositionen der Getriebewelle verglichen und Rundlauffehler der Getriebewelle daraus ermittelt. Hierzu werden, gemäß einer bevorzugten Ausführungsform, an einer durchgehend oder absatzweise sich drehenden Zahnwelle aus der aktuellen Winkellage des Verzahnungsbereiches und dem Abstand zwischen dem Referenzpunkt und dem jeweils reflektierenden Flächenelementen der Verzahnung Wertepaare erfasst und daraus wird die exakte Lage des jeweiligen Flächenelementes der Verzahnung bestimmt. Die zur Ermittlung der Rundlauffehler herangezogenen Reflektionsflächen liegen bevorzugt auf dem Abwälzkreis der Verzahnung der Welle.

Die Rundlauffehler werden sodann durch Richten zwischen den Zentriermitteln mittels Richtambossen und mindestens einem Richthammer in einer Richtpresse entfernt oder vermindert. Die Rundlaufmessung erfolgt also berührungslos im Wege der Lichtreflektion unter Abstandsmessung zwischen einer Lichtmesseinrichtung und den konkreten Reflektionsflächen an mehreren Umfangsflächenelementen der Verzahnung einer Getriebewelle. Es sind also weder Lehrzahnräder vorrätig zu halten, noch muss auf die Trägheit von Kugeltastern Rücksicht genommen werden. Die Messung wird dadurch schnell und preiswert bei kurzer Umrüstzeit.

Sinngemäß ist die Vorgehensweise beim Geraderichten von Zahnstangen: mindestens ein punkt- oder streifenförmiger Lichtstrahl mit einer radialen oder quer zur Längserstreckungsrichtung des Werkstücks weisenden Richtungskomponente wird nacheinander auf mehrere, in der Bewegungsrichtung des Werkstücks entlang des Verzahnungsbereiches gelegene eng begrenzte Flächenelemente gerichtet und abgebildet. Die Relativbewegung zwischen der Zahnstange und der Lichtmesseinrichtung erfolgt also wiederum dem Verlauf der Verzahnung entsprechend und bei dieser Anwendung bevorzugt parallel zur Längserstreckungsrichtung der Zahnstange.

Im Sinne der Erfindung wird unter einer Zahnwelle eine Welle, wie eine Getriebewelle, mit Verzahnungen jede Art von nicht rein zylindrischer Oberfläche verstanden. Bei den Verzahnungen kann es sich demnach um die verschiedensten Verzahnungstypen handeln, wie Evolventenverzahnungen, Hypoid-, Steck- oder Keilverzahnungen sowie beliebige symmetrische und unsymmetrische Querschnittsformen des Werkstücks. Das Gleiche gilt sinngemäß für die Verzahnung einer Zahnstange.

Unter einer "radialen" Ausrichtung des Lichtmessstrahles auf das lang gestreckte Werkstücke wird im Sinne der Erfindung jede nicht erstreckungsparallele Ausrichtung des Lichtmessstrahles verstanden, die es gestattet, den Messlichtstrahl an mindestens einem Flächenelement (Reflektionsfläche) der Verzahnungsoberfläche zu reflektieren, so dass der auf einem Flächenelement der Verzahnung erzeugte Lichtfleck von der Lichtmesseinrichtung beobachtet und erfasst werden kann. Sofern es sich bei der Verzahnung um eine solche mit mehreren, z.B. umfangsverteilten Zähnen handelt, ist es bei ausreichender Qualität der Abstandsmessung, insbesondere einer Messung absoluter Abstände möglich, jedes beliebige Flächenelement als Reflektionsfläche auf dem Umkreis der Verzahnung zur Rundlaufmessung heranzuziehen. Handelt es sich um einfach aufgebaute Lichtmesssysteme, so ist es in solchen Fällen möglich, jeweils ein bestimmtes Segment am Umfang jedes einzelnen Zahnes der Verzahnung für die Reflektionsmessung auszuwählen. Es werden dann die Abstände gleicher Segmente zur Lichtmesseinrichtung in den verschiedenen Winkelpositionen des lang gestreckten Werkstücks nach Art einer Relativmessung erfasst.

Angesichts der jüngsten Fortschritte bei industrietauglichen, sehr genau arbeitenden optischen Messgeräten, insbesondere bei solchen, die nach dem Laser-Triangulationsverfahren arbeiten, können die erfindungsgemäßen berührungslosen Rundlaufmessungen auch an sich kontinuierlich drehenden Wellen in kurzer Zeit und bei hoher Präzision durchgeführt und zur Auswertung durch einen so genannten Richtrechner herangezogen werden, wie er grundsätzlich für taktile Messverfahren in Richtmaschinen bereits bekannt ist (DE 197 39 368 C2).

Optische Messverfahren sind für die Vermessung von Werkstücken an sich bekannt, werden aber für ganz andere Zwecke als bei der vorliegenden Erfindung verwendet. So ist es aus der DE 3134830 A1 bekannt, ein Werkstück in Bezug auf eine vorgegebene Maschinenebene auszurichten. Hierzu wird mittels einer spiegelnden Werkstückoberfläche oder eines parallel zur Werkstückoberfläche montierten Spiegels einen Laserlichtstrahl nach den Reflexionsgesetzen zu reflektieren. Die Werkstückausrichtung ist korrekt, sobald der einfallende Lichtstrahl mit dem ausfallenden Lichtstrahl zusammenfällt. Für die Überprüfung von Zahnrädern auf Formabweichungen von einer Sollform ist es aus der DE 19718494 A1 bekannt, ein breites Lichtbündel radial auf eine Vielzahl von Zähnen eines Zahnrades zu richten und das Reflexionslicht von zwei Kameras auszuwerten. Dabei werden Fehler aufgrund der Aufspannung des Zahnrades auf einen Kalibrier-Messdorn dadurch herausgefiltert, dass auch der Kalibrier-Messdorn von dem Lichtbündel beleuchtet und dass von dort ausgehende das Reflexionslicht von den beiden Kameras ausgewertet wird. Schließlich ist es aus der DE 691 07 966 T2 bekannt, bei der Produktion von Zahnriemen den in eine Vielzahl von Zahnriemen scheibenförmig aufzuschneidenden Rohling zunächst auf das Vorliegen von Produktionsfehlern hin zu prüfen. Hierzu wird der schlauchartige Rohling über ein System von Umlenkrollen geführt und im Schlauchinneren ein Triangulationslaser achsparallel vorangetrieben, der alle Zähne des Schlauches auf Sollabweichungen hin überprüft und schadhafte Längenabschnitte des Schlauches zum Verwerfen nach erfolgtem Auftrennen zu einzelnen Zahnriemen kennzeichnet.

Es ist nun auf verschiedene Weise möglich, die Erfindung auszuführen: Bei einer ersten Ausführungsform werden mehrere optische Messeinrichtungen entlang der Getriebewelle derart angeordnet, dass jede der auf der Getriebewelle sich befindenden und hinsichtlich ihres Rundlaufes zu überprüfenden Verzahnungen in einem einzigen Arbeitsgang hinsichtlich der Rundlauffeder erfasst werden kann. Diese optischen Messeinrichtungen, wie beispielsweise Lasertaster, wie sie z.B. von der Firma Keyence am Markt vertrieben werden, und insbesondere nach dem Triangulationsverfahren arbeiten, werden z.B. auf einem Richttisch der Richtmaschine in den entsprechenden Positionen fixiert und auf die Verzahnung der hinsichtlich des Rundlauffehlers zu messenden und gegebenenfalls zu richtenden Getriebewelle ausgerichtet. Der optische Taster besteht im Wesentlichen aus einer Laserlichtquelle und die Lichtmesseinrichtung aus einer hochauflösenden Kamera. Die Lichtquelle sendet einen punktförmigen Lichtstrahl z.B. auf die Flanke des sich drehenden Zahnrades. Von diesem wird von vergleichsweise kleinen Flächensegmenten diffuses Licht reflektiert, das von einer Kamera aus, insbesondere von einer CCD-Kamera, beobachtet und aufgenommen wird. Die Distanz zwischen dem Messgehäuse als Referenzpunkt und dem Beobachtungspunkt, z.B. auf der Zahnflanke wird aus der Dreiecksgeometrie zwischen Lichtquelle, belichtetem Flächenelement auf der Verzahnung und dem jeweiligen Beobachtungsfleck auf der Aufnahmeebene der CCD-Kamera bestimmt. Die Lichtquelle und die Licht messende Kamera sind in der Regel in derselben Einheit, wie in einem Gehäuse, untergebracht. Die jeweils gemessene Distanz wird in Kombination mit der Winkellage des Werkstückes, die eigenständig gemessen werden kann, z.B. über ein entsprechendes Gebersystem an den Zentrierspitzen, erfasst. Jeder Winkellage wird eine Distanzmessung zugeordnet. So ergeben sich jeweils Wertepaare aus der gemessenen Distanz und der zugehörigen Winkelstellung der Getriebewelle. Mit diesen Wertepaaren kann nun ein zweidimensionales Abbild der Verzahnung erzeugt werden. Zur Erzielung einer akzeptablen Genauigkeit werden möglichst viele Wertepaare benötigt. Z.B. kann es bei einer so genannten Laufverzahnung sinnvoll sein, bei jeder Umdrehung eine hohe Zahl, z.B. in der Größenordnung von 100 bis 10.000 Wertepaaren, vorzugsweise in der Größenordnung von 3000 Wertepaaren zu erfassen. Aus der Abbildung der Verzahnungskontur kann nun in einem Richtrechner durch entsprechende mathematische Auswertung der Rundlauffehler, z.B. des Betriebswälzkreis-Durchmessers ermittelt werden. Der eigentliche Richtvorgang gleicht dann dem, wie er z.B. bei den Kugeltastern gemäß DE 197 39 368 C2 verwendet wird.

Es hat sich als besonders vorteilhaft erwiesen, den Abstand des optischen Tasters, insbesondere eines Lasertasters, zur Verzahnung recht genau einzustellen, z.B. in einem Bereich von +/- 1 bis 10 mm, insbesondere im Bereich von etwa +/- 2 bis 4 mm.

Um trotz hoher Messgenauigkeit den Aufwand einer erfindungsgemäßen Rundlaufmesseinrichtung zu verringern, wird bei einer anderen Ausführungsform die Messlichtstrahlquelle und die Reflektionslichtmesseinrichtung an einem Halter des Richthammers oder eines Richtambosses befestigt, so dass die optische Messeinrichtung mit dem Richthammer oder dem Richtamboss gemeinsam entlang des lang gestreckten Werkstücks und radial dazu verfahrbar ist. Der während der Messfahrt ansonsten nicht benötigte Verfahrantrieb für den Richthammer oder Richtamboss wird somit dazu genutzt, jede Verzahnung in axialer und radialer Richtung schnell und präzise so anzufahren, dass eine besonders genaue Rundlaufmessung an der Verzahnung vorgenommen werden kann.

Um den Erfolg eines Richtvorgangs auf den Rundlauf in vergleichsweise kurzer Zeit zu ermöglichen, ist es nicht zwingend erforderlich, eine erneute vollständige Rundlaufmessung mit der optischen Messeinrichtung durchzuführen. Es ist auch möglich, hierzu einen einfachen, an sich bekannten mechanischen Taster zu verwenden. Dies wird dadurch möglich, dass der mechanische Taster während der Messfahrt einer optischen Rundlaufmessung zusätzlich zum Einsatz kommt. Es hat sich herausgestellt, dass zwischen dem Messergebnis eines mechanischen Tasters und des optischen Tasters eine konstante Vektorbeziehung besteht. Wenn diese Vektorbeziehung während der Messfahrt des optischen Tasters ermittelt wird, kann sie nach jedem Richtschritt dazu genutzt werden, das Richtergebnis allein durch mechanische Abtastung zu ermitteln. Dies ist schneller und mit geringerem Rechneraufwand möglich als eine erneute optische Abtastung der Verzahnung.

Bei entsprechender Ausbildung der Lichtstrahlquelle, ist auch eine streifenförmige Abtastung möglich, so dass anstatt eines Reflektionspunktes ein Reflektionsstreifen auf der Verzahnung optisch abgebildet und diffus reflektiert wird. Wenn dieser Streifen Parallel zu den Zähnen der Verzahnung, also z.B. in Achsrichtung der Getriebewelle oder in einem vorgegebenen Winkel zu ihr ausgerichtet ist, kann eine Verzahnung auf einer gewissen Verzahnungslänge als Ganzes überprüft werden. Das gilt auch für Zahnstangen.

Auch Form- und Teilungsfehler der Verzahnung können durch die Erfindung ermittelt werden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Messverfahrens dargestellt ist.

### KURBESCHREIBUNG DER FIGUREN

In der Zeichnung zeigen
- Fig. 1A/B: eine Prinzipdarstellung des erfindungsgemäßen Messverfahren in axialer und in radialer Ansicht;
- Fig. 2A/B: eine Rundlaufmess- sowie Richteinrichtung einer Getriebewelle mit Verzahnung in axialer und radialer Ansicht;
- Fig. 3A/B: eine alternative Ausführungsform einer Rundlaufmess- sowie Richteinrichtung einer Getriebewelle mit Verzahnung in axialer und radialer Ansicht;
- Fig. 4A: eine weitere alternative Ausführungsform einer Rundlaufmess- sowie Richteinrichtung einer Getriebewelle mit Verzahnung in axialer Ansicht;
- Fig. 4B: ein Vektordreieck zur Ermittlung eines Korrekturvektors;
- Fig. 5A/B: eine weitere Ausführungsform zur Vermessung einer Welle mit in axialer Richtung angeordneter Verzahnung in axialer und radialer Ansicht; sowie
- Fig. 6A/B: eine weitere Ausführungsform zur Vermessung einer Welle mit in axialer
Richtung angeordneter Verzahnung in axialer und radialer Ansicht, zur Vermessung der Verzahnung über die gesamte Länge.

### DETAILLIERTE BESCHREIBUNG DER AUSFÜHRUNGSBEISPIELE

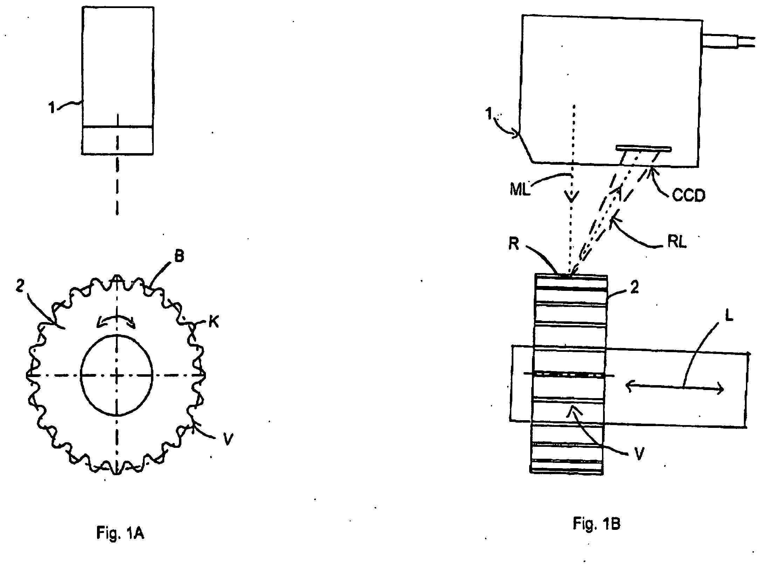

Figuren 1A/B zeigen als lang gestrecktes Werkstück 2 eine Zahnwelle mit Zahnrad in axialer bzw. radialer Ansicht, oberhalb dessen ein Lasertaster 1 angeordnet ist, dessen Lichtstrahl ML mit einer radialen Richtungskomponente auf die Verzahnungskontur des Werkstückes 2 gerichtet ist. Der punktförmige Lichtstrahl ML, wird nacheinander an Flächenelementen der Verzahnung diffus reflektiert und das reflektierte Licht des Reflexionsflecks R wird z.B. mit einer CCD-Kamera beobachtet respektive auf einem CCD-Element der Kamera abgebildet. Als Lichtstrahl ML wird hierzu ein Laserstrahl verwendet, der von der Messobjektoberfläche überwiegend diffus reflektiert wird; spiegelnde Reflexionsanteile sind unschädlich. Eine Empfängerlinse fokussiert das reflektierte Licht auf das CCD-Element. Wenn sich das Messobjekt so bewegt, dass sich der Abstand des Reflexionsflecks R bezüglich eines Referenzpunktes, wie der Lichtquelle, verändert, so sich auch die Fokusposition auf dem CCD-Element. So kann die Abstandsänderung des Messobjektes festgestellt werden, indem die Änderung der Fokusposition erkannt wird.

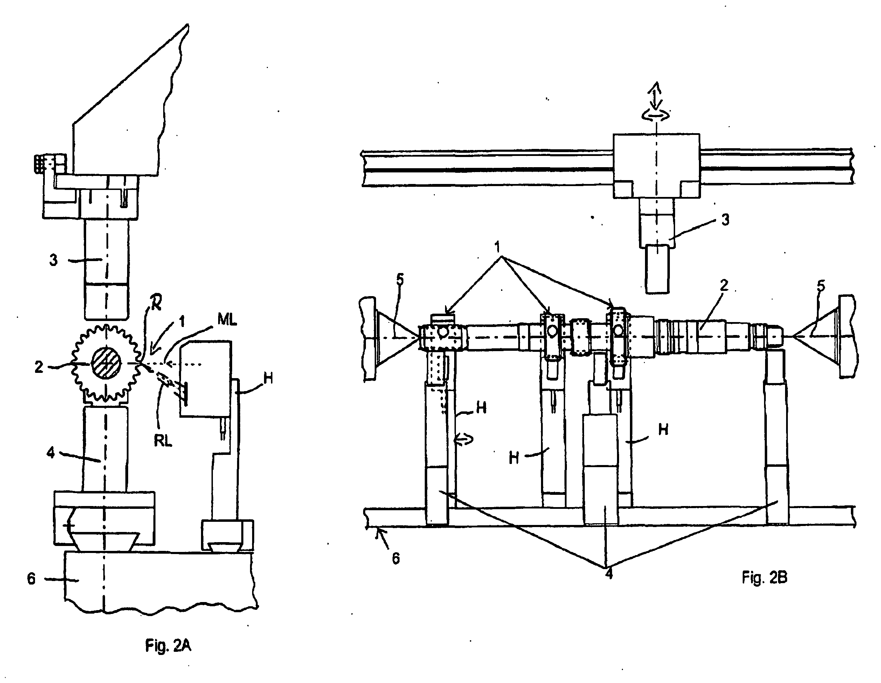

Wie aus Figur 2A/B ersichtlich, können mehrere Lasertaster 1 in eine Richtvorrichtung eingebaut werden. Der/die Taster 1 werden so installiert, dass der Lichtstrahl ML mit einer radialen Komponente auf die Verzahnung des Werkstücks 2 fällt. Vorzugsweise wird jeder Taster seitenverschiebbar, also in Längserstreckungsrichtung L, auf einem Richttisch 6 befestigt.

Für die Winkelausrichtung der Taster sind mehrere Varianten denkbar. Sie können etwa vor, hinter, über oder unter dem Werkstück angeordnet sein. Bei einer Installation unter der Welle/dem Werkstück besteht das Risiko, dass ein beim Richtvorgang versehentlich brechendes Werkstück die Messeinrichtung beschädigt. Eine Installation des Messtasters oberhalb des Werkstückes sollte so erfolgen, dass das axiale Verfahren des Richthammers beim Wechsel der Richtstelle nicht behindert wird. In dem Ausführungsbeispiel ist exemplarisch eine Anordnung des Messtasters vorgesehen, in der dieser hinter dem Werkstück installiert ist. Bei dem dargestellten Ausführungsbeispiel nach Fig. 2A/B sind drei Messtaster 1 vorgesehen und jeder von diesen ist einer der Verzahnungen des Werkstückes 2 zugeordnet.

Das Werkstück 2 ist zwischen drehbaren Spitzen 5 eingespannt. Es kann mit dem in axialer Richtung verfahrbaren Richthammer 3 gegen die Richtambosse 4 gedrückt werden, so dass zuvor erfasste Rundlauffehler beseitigt werden. Der etwa horizontal auf das Werkstück 2 ausgerichtete Lasertaster 1 ist auf einem bezüglich des Maschinentisches 6 seitenverschiebbaren Halters H in einstellbarem Abstand von der Drehachse der Zentriermittel (Drehspitzen 5) anzuordnen. Der Lasertaster 1 ist auch höhenverstellbar, um z.B. ganz bestimmte Flächenelemente einer Verzahnung in einem bestimmten Winkel belichten zu lassen.

Mit einer derartigen Anordnung können fast beliebig viele Verzahnungen bei einer einzigen Werkstückdrehung simultan und damit schnell in verschiedenen Längserstreckungspositionen abgetastet werden. Einschränkend ist allenfalls die (allerdings relativ geringe) Breite eines Lasertasters.

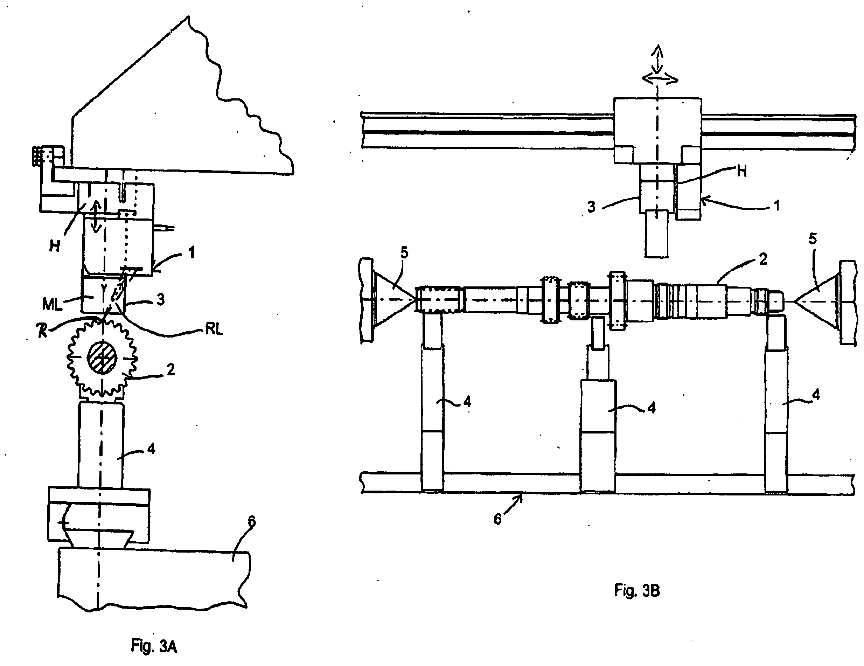

Bei dem Ausführungsbeispiel nach Figuren 3A/B ist ein einzelner Lasertaster 1 für mehrere der zu vermessenden Verzahnungen vorgesehen. Die Verzahnungen werden nacheinander vermessen. Dieser Lasertaster ist nicht dem Maschinentisch, sondern dem axial und radial (in der Zeichnung in Längserstreckungsrichtung und rechtwinklig dazu, insbesondere vertikal) verfahrbaren Richthammer 3 mittels eines Halters H zugeordnet. So kann der Lasertaster 1 ohne jede Umrüstung durch Ansteuerung der Verfahrantriebe des Richthammers sowohl axial als auch radial an die gewünschte Messstelle in den optimalen Arbeitsbereich/Abstandsbereich verfahren werden. Ein zeitaufwändiges Ausrichten bei jeder Umrüstung der Messanordnung entfällt also. Die Installation oberhalb des Werkstücks erlaubt eine gute geschützte Unterbringung des Lasertasters 1 und ermöglicht es, den Richterfolg nach jedem Richthub ohne Drehung des Werkstückes unmittelbar erfassen zu können, weil der Lasertaster in Wirkrichtung des Richthammers arbeitet.

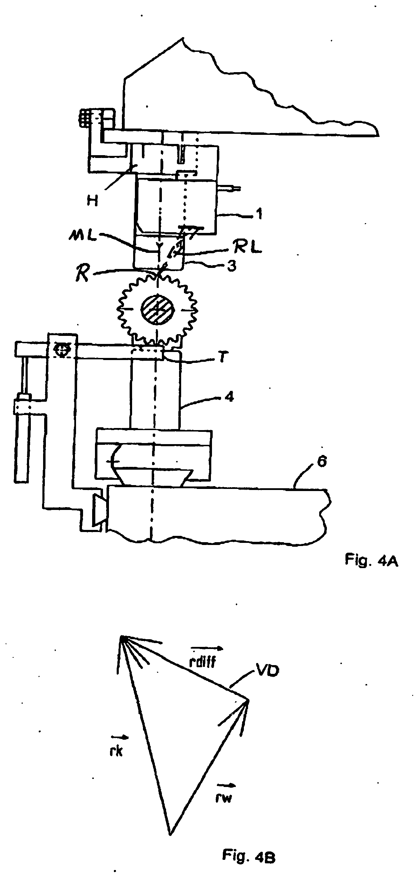

Fig.4A zeigt eine Ausführungsform mit zusätzlichem mechanischen Taster T, so dass aus den Rundlaufmessungen beider Messsysteme ein für die betreffende Verzahnung gültiger Differenzvektor gemäß Fig. B bestimmbar ist.

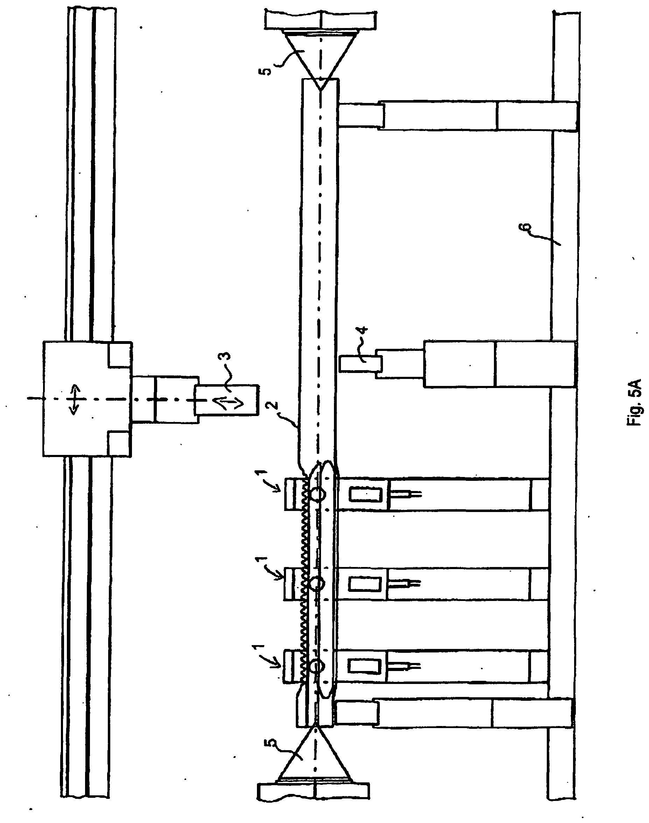

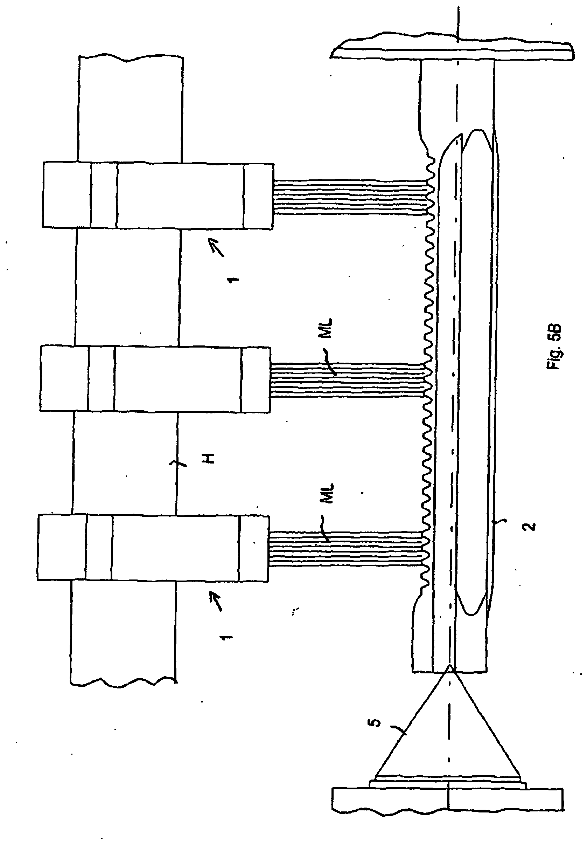

Fig.5 A/B zeigt eine Ausführungsform zur Vermessung einer Zahnstange in Gestalt einer Welle mit axialer Verzahnung, zum Beispiel einer Lenkungszahnstange. Die Anordnung des Lasertasters 1 entspricht dem Beispiel in Figur 2A/B. Bei der Vermessung axialer Verzahnungen ist es vorteilhaft, mit einem streifen- statt punktförmigen Laserstrahl die Geometrie mindestens einer Zahnteilung gleichzeitig zu erfassen. So kann auch in diesem Fall bei Rotation des Werkstücks die Position des Betriebswälzkreises relativ zur Drehachse ermittelt werden, was für den Richtvorgang vorteilhaft ist. In der Draufsicht (Bild 5B) sind die streifenförmigen Laserstrahlen angedeutet, wobei zur Verdeutlichung das Werkstück 2 um 90° gedreht dargestellt ist.

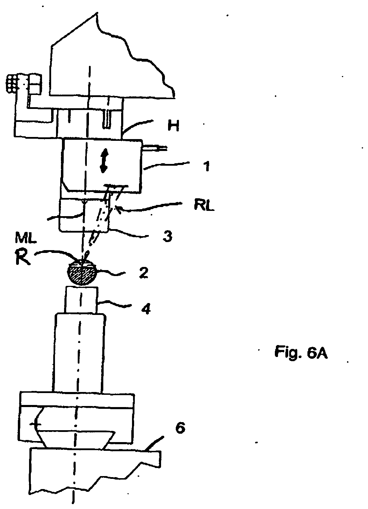

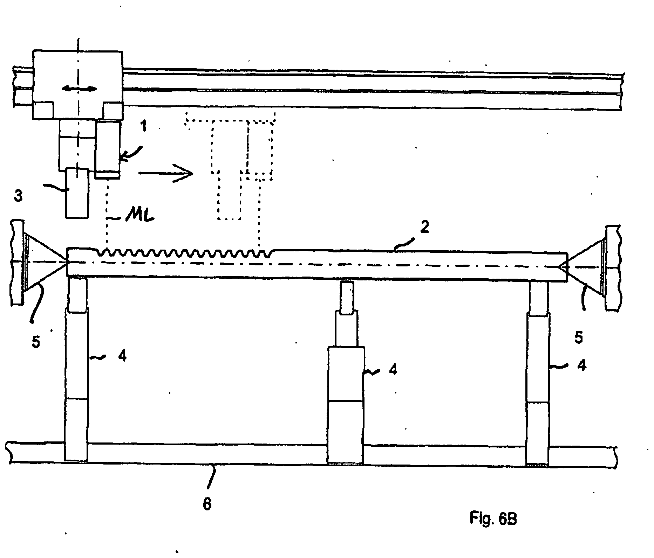

Fig.6 A/B zeigt eine weitere Ausführungsform zur Vermessung einer Zahnstange in Gestalt einer Welle mit axialer Verzahnung, zum Beispiel einer Lenkungszahnstange. Die Anordnung des Lasers entspricht dem Beispiel in Figur 3A/B bzw. 4A. Durch axiales Verfahren kann die gesamte Länge der Verzahnung in Bezug auf Ihre Geradheit vermessen werden. Für den Richtvorgang werden wieder zusätzliche mechanische Taster eingesetzt.

### BEZUGSZEICHENLISTE

- 1: Lasertaster
- 2: Werkstück
- 3: Richthammer
- 4: Richtamboss
- 5: Drehspitzen
- 6: Richttisch
- B: Betriebswälzkreis
- H: Halter
- K: Kopfkreis
- L: Längserstreckungsrichtung
- CCD: CCD-Kamera
- R: Reflektionsfläche
- ML: Lichtstrahl
- RL: Reflektionslicht
- V: Verzahnung
- T: Taster
- VD: Differenzvektor

## Patentansprüche

1. Verfahren zum Richten von Rundlauf- oder Gradheitsfehlern an lang gestreckten, zwischen Zentriermitteln (5) eingespannten Werkstücken (2) mit mindestens einem eine Bewegungsrichtung des Werkstücks definierenden Verzahnungsberelch (V), wie an Zahnwellen oder an Zahnstangen, wobei die Rundlauf- oder Gradheitsfehler durch Richten zwischen den Zentriermitteln (5) mittels Richtambossen (4) und mindestens einem Richthammer (3) In einer Richtpresse entfernt oder vermindert werden,
**dadurch gekennzeichnet, dass**
- eine berührungslose Messung erfolgt, wobei mindestens ein punkt- oder streifenförmiger Lichtstrahl (ML) mit einer radialen oder quer zur Längserstreckungsrichtung des Werkstücks weisenden Richtungskomponente nacheinander auf mehrere, in der Bewegungsrichtung des Werkstücks entlang des Verzahnungsbereiches gelegene eng begrenzte Flächenelemente gerichtet und abgebildet wird;
- von den Flächenelementen der Verzahnung reflektiertes Messlicht (RL) von einer Lichtmesseinrichtung erfasst und zur Abstandsmessung der Reflektionsflächen (R) der Verzahnung von einem Referenzpunkt verarbeitet wird;
- die Abstände der Reflektionsflächen (R) von dem Referenzpunkt in verschiedenen Winkel- und/oder Längserstreckungspositionen des Werkstücks verglichen und Rundlauf- oder Gradheitsfehler des Werkstücks daraus ermittelt werden;

2. Verfahren nach Anspruch 1, **dadurch gekennzeichnet, dass** an einer sich drehenden Zahnwelle Wertepaare aus der aktuellen Winkellage des Verzahnungsbereiches und dem Abstand zwischen dem Referenzpunkt und dem jeweils reflektierenden Flächenelementen der Verzahnung erfasst werden und daraus die exakte Lage des jeweiligen Flächenelementes der Verzahnung bestimmt wird.

3. Verfahren nach Anspruch 2, **dadurch gekennzeichnet, dass** die zur Ermittlung der Rundlauffehler herangezogenen Reflektionsflächen (R) auf dem Abwälzkreis der Verzahnung der Welle liegen.

4. Verfahren nach einem der Ansprüche 1 bis 3, **dadurch gekennzeichnet, dass** die Lichtstrahlquelle und die Reflektionslichtmesseinrichtung an einem Halter (H) des Richthammers (3) oder eines Richtambosses (4) gemeinsam mit diesem entlang Werkstücks und quer dazu verfahren werden,

5. Verfahren nach einem der Ansprüche 2 bis 4, **dadurch gekennzeichnet, dass** Rundlauffehler am Kopfkreis der Verzahnung (V) der Welte mittels eines mechanischen Tasters (T) in Abhängigkeit von der Winkelposition der Welle erfasst werden und ein Korrekturvektor zwischen den Reflektionsmessungen und der taktilen Messung ermittelt wird und das Richtergebnis nur noch mittels einer winkelpositionsabhängigen taktilen Messung überprüft wird.

6. Verfahren nach einem der Ansprüche 1 bis 5, **dadurch gekennzeichnet, dass** die optische Abtastung der Verzahnung (V) streifenförmig erfolgt.

7. Verfahren nach einem der Ansprüche 2 bis 6, **gekennzeichnet durch** Form- und/oder Teilungsfehlermessungen mittels der Rundlaufmesseinrichtung.

8. Verfahren nach einem der Ansprüche 1 bis 7, **dadurch gekennzeichnet, dass** ein nach dem Triangulationsverfahren arbeitender Laser zur optischen Rundlauf- und/oder Geradheitsmessung verwendet wird.

9. Vorrichtung umfassend:
eine Richtpresse zum Richten von Rundlauf- oder Geradheitsfehlern an lang gestreckten, zwischen Zentriermitteln (5) eingespannten Werkstücken (2) mit mindestens einem eine Bewegungsrichtung des Werkstücks definierenden Verzahnungsbereich (V), wie an Zahnwellen oder an Zahnstangen, und
ein zwischen den Zentriermitteln (5) eingespanntes Werkstück (2) mit wenigstens einem eine Bewegungsrichtung des Werkstücks definierenden Verzahnungsbereich (V),
**gekennzeichnet durch**
- einen optischen Taster (1) umfassend mindestens eine im Bereich zwischen Zentriermitteln (5) des Werkstücks (L) angeordnete Lichtstrahlquelle mit einem auf im Verzahnungsbereich des Werkstücks gelegene eng begrenzte Flächenelemente ausgerichteten punkt- oder streifenförmigen Lichtstrahl (ML) mit einer radialen oder quer zur Längserstreckungsrichtung des Werkstücks weisenden Richtungskomponente.
- eine Lichtmesseinrichtung zum Erfassen des von den Flächenelementen der Verzahnung des Werkstücks reflektierten Lichtstrahles (RL) und zur Auswertung des Messergebnisses im Sinne einer Abstandsmessung der Reflektionsfläche (R) der Verzahnung von einem Referenzpunkt.

10. Vorrichtung nach Anspruch 9, weiterhin umfassend einen mechanischen Taster (T), welcher mit dem optischen Taster (1) eine konstante Vektorbeziehung aufweist.

## Claims

1. A method for correcting roundness or straightness errors on elongated workpieces (2) clamped between centring means (5), with at least one toothed zone (V) that defines a movement direction of the workpiece, such as on gear shafts or on gear racks, wherein the roundness or straightness errors are removed or reduced by correction between the centring means (5) by means of straightening anvils (4) and at least one straightening hammer (3) in a straightening press,
**characterised in that**
- non-contacting measurement takes place, wherein at least one point-like or strip-like light beam (ML) with a directional component that points radially or across the direction of longitudinal extension of the workpiece is successively directed and imaged to several narrowly delimited area elements that in the direction of movement of the workpiece are situated along the toothed zone;
- measurement light (RL) reflected by the area elements of the tooth arrangement is acquired by a light measuring device and is processed for measuring the distance of the space of the reflection surfaces (R) of the tooth arrangement from a reference point;
- the distances of the reflection surfaces (R) from the reference point in various angular positions and/or positions of longitudinal extension of the workpiece are compared, and from this comparison roundness or straightness errors of the workpiece are determined.

2. The method according to claim 1, **characterised in that** on a rotating gear shaft, value pairs from the current angular position of the toothed zone and from the distance between the reference point and the respectively reflective area elements of the tooth arrangement are acquired, and from them the precise position of the respective area elements of the tooth arrangement are determined.

3. The method according to claim 2, **characterised in that** the reflection surfaces (R) used for determining the roundness errors are situated on the roll-off circle of the tooth arrangement of the shaft.

4. The method according to any one of claims 1 to 3, **characterised in that** the light beam source and the reflection light measuring device are moved on a holder (H) of the straightening hammer (3) or of a straightening anvil (4) together with said straightening hammer (3) or straightening anvil (4) along the workpiece and across said workpiece.

5. The method according to any one of claims 2 to 4, **characterised in that** roundness errors at the tip circle of the tooth arrangement (V) of the shaft are acquired by means of a mechanical probe (T) depending on the angle position of the shaft, and a correction vector between the reflection measurements and the tactile measurement is determined, and the correction result is only checked by means of tactile measuring that depends on an angle position.

6. The method according to any one of claims 1 to 5, **characterised in that** optical scanning of the tooth arrangement (V) takes place in a strip-shaped manner.

7. The method according to any one of claims 2 to 6, **characterised by** shape and/or pitch error measuring with the use of the device for measuring roundness.

8. The method according to any one of claims 1 to 7, **characterised in that** a laser operating according to the triangulation method is used for the optical measuring of roundness and/or straightness.

9. A device comprising:
a straightening press for correcting roundness or straightness errors on elongated workpieces (2) clamped between centring means (5), with at least one toothed zone (V) that defines a movement direction of the workpiece, such as on gear shafts or on gear racks, and
an elongated workpiece (2) clamped between the centring means (5), with at least one toothed zone (V) that defines a movement direction of the workpiece,
**characterised by**
- an optical probe (1) comprising at least one light beam source, arranged in the region between centring means (5) of the workpiece (2), with a point-like or strip-like light beam (ML), aligned to narrowly limited area elements situated in the toothed zone of the workpiece, with a directional component pointing radially or across the direction of longitudinal extension of the workpiece,
- a light measuring device for acquiring the light beam (RL) reflected by the area elements of the tooth arrangement of the workpiece and for evaluating the measuring results in terms of measuring the distance of the reflection surface (R) of the tooth arrangement (V) from a reference point.

10. The device according to claim 9, further comprising a mechanical probe (7) that has a constant vector relationship with the optical probe (1).

## Revendications

1. Procédé destiné à corriger des erreurs de circularité ou de rectitude sur des pièces (2) de forme allongée serrées entre des moyens de centrage (5) dotées d'au moins une zone dentée (V), comme des arbres dentés ou des crémaillères, définissant un sens de déplacement de la pièce, sachant que les erreurs de circularité ou de rectitude sont éliminées ou réduites par dressage entre les moyens de centrage (5) via des enclumes de dressage (4) et au moins un dressoir (3) dans une presse de dressage,
**caractérisé en ce**
- **qu'**une mesure sans contact est effectuée, dans laquelle au moins un faisceau lumineux (ML) formant un point ou une bande avec une composante d'alignement orientée radialement ou transversalement à l'alignement d'allongement de la pièce, est aligné ou dessiné successivement sur plusieurs éléments de surface délimités étroitement, placés dans le sens de déplacement de la pièce le long de la zone dentée, ;
- une lumière de mesure (RL) réfléchie par les éléments de surface de la denture est détectée par un dispositif de photométrie et est traitée pour mesurer la distance des surfaces de réflexion (R) de la denture à un point de référence ;
- les distances des surfaces de réflexion (R) du point de référence sont comparées dans différentes positions d'angle et/ou d'allongement de la pièce et des erreurs de circularité ou de rectitude de la pièce en sont calculées.

2. Procédé selon la revendication 1, **caractérisé en ce que** sur un arbre denté rotatif, des paires de valeur issues de la position d'angle actuelle de la partie dentée et de la distance entre le point de référence et les éléments de surface réfléchissant respectifs de la denture sont détectées et que la position exacte de l'élément de surface respectif de la denture en est déterminé.

3. Procédé selon la revendication 2, **caractérisé en ce que** les surfaces de réflexion (R) utilisées pour calculer les erreurs de circularité reposent sur le cercle de développement de la denture de l'arbre.

4. Procédé selon l'une des revendications 1 à 3, **caractérisé en ce que** la source de faisceau lumineux et le dispositif de photométrie de réflexion sont déplacés sur un support (H) du dressoir (3) ou d'une enclume de dressage (4) conjointement avec celui-ci le long de la pièce et transversalement à celle-ci.

5. Procédé selon l'une des revendications 2 à 4, **caractérisé en ce que** des erreurs de circularité sur le cercle extérieur de la denture (V) de l'arbre sont détectées au moyen d'un palpeur mécanique (T) en fonction de la position d'angle de l'arbre, et un vecteur de correction entre les mesures de réflexion et la mesure tactile est calculé et le résultat de dressage n'est plus vérifié qu'au moyen d'une mesure tactile qui est fonction de la position d'angle.

6. Procédé selon l'une des revendications 1 à 5, **caractérisé en ce que** la palpation optique de la denture (V) s'effectue en forme de bande.

7. Procédé selon l'une des revendications 2 à 6, **caractérisé par** des mesures d'erreur de forme et/ou de division au moyen du dispositif de mesure de circularité.

8. Procédé selon l'une des revendications 1 à 7, **caractérisé en ce qu'**un laser fonctionnant selon le procédé de la triangulation est employé pour la mesure optique de circularité et/ou de rectitude.

9. Dispositif comprenant:
une presse à dresser destinée à corriger des erreurs de circularité ou de rectitude sur des pièces (2) de forme allongée serrées entre des moyens de centrage (5) dotées d'au moins une zone dentée (V), comme des arbres dentés ou des crémaillères, définissant un sens de déplacement de la pièce, et
une pièce (2) de forme allongée serrée entre les moyens de centrage (5) et dotée d'au moins une zone dentée (V), définissant un sens de déplacement de la pièce,
- **caractérisé par** un palpeur optique (1) comprenant au moins une source de faisceau lumineux disposée dans la zone entre les moyens de centrage (5) de la pièce (2), comprenant un faisceau lumineux (ML) en forme de point ou de bande aligné sur des éléments de surface délimités étroitement, placés dans la zone dentée de la pièce,
- un dispositif de photométrie pour détecter le faisceau lumineux (RL) réfléchi par les éléments de surface de la denture de la pièce et pour évaluer le résultat de mesure au sens d'une mesure de la distance de la surface de réflexion (R) de la denture à un point de référence.

10. Dispositif selon la revendication 9, comprenant en outre un palpeur mécanique (T) qui présente une relation de vecteur constante avec le palpeur optique (1).
